# FASCICULE DE BREVET EUROPEEN

(11) **EP 2 254 794 B1**
(45) Date de publication et mention de la délivrance du brevet: **26.08.2015**
(21) Numéro de dépôt: 09722147.7
(22) Date de dépôt: 04.02.2009
(51) Int. Cl.: B64D 29/08, B64D 29/06

(54) **SYSTEME D'ACTIONNEMENT ET DE CONTROLE D'UN CAPOT MOBILE DE NACELLE DE TURBOREACTEUR**
SYSTEM ZUR BETÄTIGUNG UND STEUERUNG DER MOBILEN VERSCHALUNG EINER TRIEBWERKSGONDEL
SYSTEM FOR ACTUATING AND CONTROLLING THE MOBILE COWLING OF A TURBOJET ENGINE NACELLE

(30) Priorité: 14.03.2008 FR 0801396
(43) Date de publication de la demande: 01.12.2010
(73) Titulaire: Aircelle, 76700 Gonfreville l'Orcher (FR)
(72) Inventeur: LE COQ Vincent, Pierre, Germain, F-14600 La Rivière Saint Sauveur (FR); GEROME, Marc, F-76600 Le Havre (FR)
(74) Mandataire: Gaillarde, Frédéric F. Ch.
(86) Numéro de dépôt international: PCT/FR2009/000125
(87) Numéro de publication internationale: WO 2009/115662

(56) Documents cités:
- WO-A-2006/134253
- FR-A- 2 905 357
- GB-A- 2 274 490
- US-B1- 6 622 963

## Description

La présente invention se rapporte à un système d'actionnement et de contrôle d'au moins un capot mobile d'une nacelle de turboréacteur, comprenant au moins un moyen de verrouillage à commande électrique dudit capot et au moins un actionneur destiné à l'entraînement dudit capot.

Un avion est mû par plusieurs turboréacteurs logés chacun dans une nacelle abritant également un ensemble de dispositifs d'actionnement annexes liés à son fonctionnement et assurant diverses fonctions lorsque le turboréacteur est en fonctionnement ou à l'arrêt. Ces dispositifs d'actionnement annexes comprennent notamment un système mécanique d'actionnement d'inverseurs de poussée mais également un ou plusieurs capots mobiles destinés à permettre l'accès à l'intérieur de la nacelle en vue d'opération de maintenance.

Plus précisément, une nacelle présente généralement une structure comprenant une entrée d'air en amont du moteur, une section médiane destinée à entourer une soufflante du turboréacteur, et une section aval destinée à entourer la chambre de combustion du turboréacteur et abritant des moyens d'inversion de poussée.

L'entrée d'air comprend, d'une part, une lèvre d'entrée adaptée pour permettre la captation optimale vers le turboréacteur de l'air nécessaire à l'alimentation de la soufflante et des compresseurs internes du turboréacteur, et d'autre part, une structure aval sur laquelle est rapportée la lèvre et destinée à canaliser convenablement l'air vers les aubes de la soufflante, ladite structure aval comprenant une virole externe et un panneau acoustique interne. L'ensemble est rattaché en amont d'un carter de la soufflante appartenant à la section médiane de la nacelle. La virole externe peut comprendre un ou plusieurs panneaux mobiles permettant un accès à l'intérieur de la structure d'entrée d'air en vue d'opérations de maintenance. Un exemple de panneau de maintenance est décrit dans la demande FR 06/08599 au nom de la demanderesse.

La structure médiane entoure la soufflante et se décompose généralement en une paroi interne formant ledit carter de soufflante et une paroi externe se présentant sous la forme de capots amovibles montés pivotants autour d'un axe longitudinal formant charnière en partie supérieure (à 12h) de la nacelle en vue de permettre un accès à l'intérieur de la nacelle.

Ainsi, de tels capots de maintenance équipant différentes zone d'une nacelle peuvent être montés mobiles de manière générale en translation ou en rotation, et dans ce dernier cas s'ouvrir en papillon, par exemple.

L'actionnement des capots de maintenance se fait au moyen d'un ou plusieurs actionneurs, pneumatiques, hydrauliques ou électriques.

Un système d'actionnement électrique est connu de WO2006/134253, qui constitue l'art antérieur le plus proche.

Par ailleurs, chaque capot est associé à des moyens de verrouillage manuel assurant son maintien en position de fermeture.

L'ensemble des opérations de déverrouillage et ouverture et réciproquement de fermeture et verrouillage est consommatrice de temps pour un agent de maintenance et nécessite de nombreuses manoeuvres. Par ailleurs, la fermeture manuelle des moyens de verrouillage peut être source d'erreurs, d'oublis, ou de mauvaise fermeture, ce qui peut présenter un danger en vol.

La présente invention vise à fournir un système d'actionnement simple et fiable assurant l'ouverture d'un ou plusieurs capots mobiles et permettant une simplification des manoeuvres de verrouillage et déverrouillage des capots de maintenance ainsi que présentant une sécurité accrue.

Pour ce faire, la présente invention se rapporte à un système d'actionnement et de contrôle d'au moins un capot mobile d'une nacelle de turboréacteur, tel que defini par les caractéristiques techniques de la revendication 1.

Ainsi, en associant le capot de maintenance à un système de commande centralisé, il est possible de mettre en oeuvre une ou plusieurs séquences d'ouverture et/ou de fermeture adaptées qui seront réalisées par l'unité de commande gérant alors l'ensemble des opérations de verrouillage / déverrouillage et d'actionnement.

La mise en oeuvre d'une telle séquence automatique facilite grandement le travail de l'opérateur et représente un gain de temps non négligeable, notamment puisque celui-ci n'a plus à se déplacer tout autour de la nacelle pour ouvrir ou fermer les différents capots mobiles.

L'automatisation du verrouillage et du déverrouillage des capots permet également la mise en oeuvre d'un réglage en pré-tension du capot mobile en position fermée.

Avantageusement, le système d'actionnement comprend au moins un moyen de détection de l'état verrouillé ou déverrouillé du moyen de verrouillage ledit moyen de détection étant apte à retourner l'information au système de commande pour traitement et/ou affichage.

Avantageusement encore, le système d'actionnement comprend au moins un capteur de position du capot mobile, ledit capteur de position étant apte à retourner l'information au système de commande pour traitement et/ou affichage.

De manière avantageuse, le système d'actionnement comprend au moins un capteur d'approche d'une position de fermeture du capot mobile, ledit capteur étant apte à retourner l'information au système de commande pour traitement en vue de limiter l'effort délivré par l'actionneur électromécanique et/ou limiter la vitesse et/ou avertir, de façon sonore ou lumineuse par exemple, de la fermeture ou de l'ouverture.

Préférentiellement, le système d'actionnement comprend au moins un organe de commande manuel relié au système de commande.

Avantageusement, l'unité de commande est intégrée à un actionneur.

De manière avantageuse, l'unité de commande centralisée comprend au moins une sortie d'informations d'état à destination du cockpit, par exemple. Ainsi, le pilote peut se rendre compte visuellement du bon verrouillage des capots, notamment.

De manière préférentielle, l'actionneur est un actionneur électromécanique.

La présente invention se rapporte également à une nacelle de turboréacteur comprenant une structure d'entrée d'air apte à canaliser un flux d'air vers une soufflante du turboréacteur et une structure médiane destinée à entourer ladite soufflante et à laquelle est rattachée la structure d'entrée d'air de manière à assurer une continuité aérodynamique, la structure d'entrée d'air comprenant, d'une part, au moins un panneau interne fixé à la structure médiane et formant avec cette dernière une structure fixe de la nacelle, et d'autre part, au moins un panneau externe longitudinal rattaché de manière amovible à la structure fixe et intégrant une lèvre d'entrée d'air de manière à former une structure d'entrée d'air amovible, caractérisée en ce que la structure d'entrée d'air amovible est associée à un système d'actionnement selon l'invention.

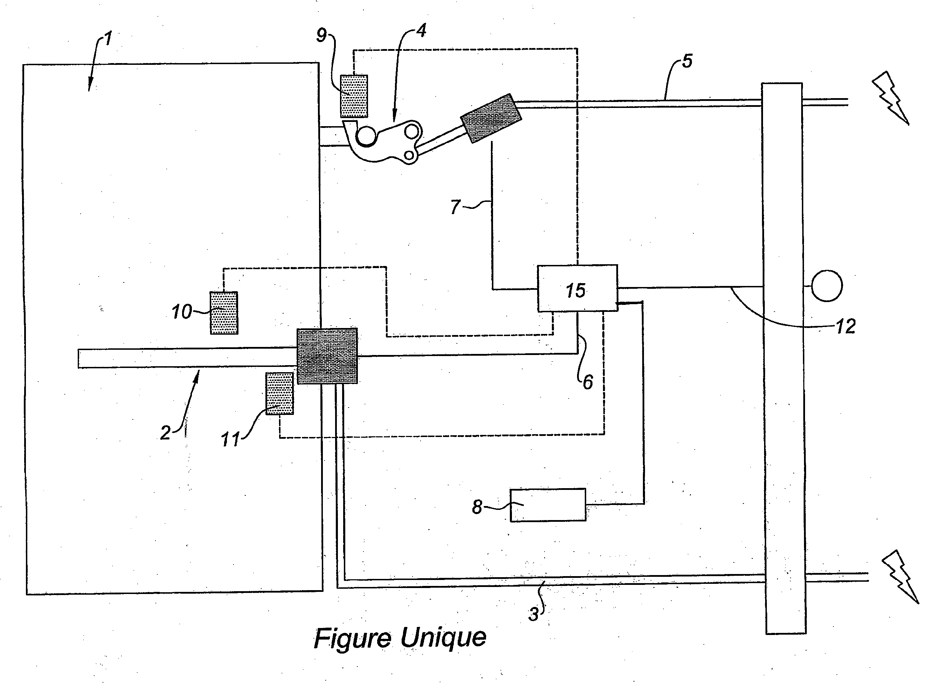

La mise en oeuvre de l'invention sera mieux comprise à l'aide de la description détaillée qui est exposée ci-dessous en regard du dessin annexé dans lequel la figure unique est une représentation schématique d'un système d'actionnement selon l'invention.

Une nacelle (non représentée) constitue un logement tubulaire pour un turboréacteur dont elle sert à canaliser les flux d'air qu'il génère en définissant des lignes aérodynamiques internes et externes nécessaires à l'obtention de performances optimales. Elle abrite également différents composants nécessaires au fonctionnement du turboréacteur ainsi que des systèmes annexes tels qu'un inverseur de poussée.

La nacelle est destinée à être rattachée à une structure fixe d'un avion, telle qu'une aile, par l'intermédiaire d'un pylône.

Plus précisément, une nacelle possède une structure comprenant une section avant formant une entrée d'air, une section médiane comprenant un carter entourant une soufflante du turboréacteur, et une section arrière entourant le turboréacteur et pouvant abriter un système d'inversion de poussée.

Afin de permettre un accès à l'intérieur de la nacelle lors d'opérations de maintenance au sol, la structure médiane comporte un ou plusieurs panneaux mobiles formant capots constitués chacun par au moins une partie d'une paroi externe de la structure médiane. Selon la nacelle, on pourra trouver des capots mobiles pouvant s'ouvrir en papillon, par exemple, en les articulant autour de charnières disposées à proximité du mât en partie supérieure de la nacelle, mais encore latéralement ou par translation.

Chaque capot mobile est associé à des moyens de verrouillage assurant son maintien en position de fermeture.

Ainsi, en position de fermeture, les capots mobiles assurent la continuité aérodynamiques externe de la nacelle tandis qu'après déverrouillage et ouverture, ils permettent un accès à l'intérieur de la nacelle afin d'y réaliser des opérations de maintenance.

La structure d'entrée d'air peut également présenter de tels capots mobiles.

Un système d'acctionnement et de commande selon l'invention est représenté schématiquement sur la figure unique.

Un capot mobile 1 est apte à être actionné par l'intermédiaire d'au moins un actionneur électromécanique 2 alimenté électriquement par une ligne d'alimentation électrique 3, et est associé à des moyens de verrouillage 4 commandables électriquement et alimentés par une ligne d'alimentation électrique 5.

Bien que la figure unique ne montre qu'un actionneur 2 et qu'un moyen de verrouillage 4, leur nombre n'est bien évidemment pas limité, et l'invention vise également l'actionnement de plusieurs capots 1, pouvant chacun être actionnés par un ou plusieurs actionneurs 2 et associés à un ou plusieur moyens de verrouillage 4.

Le système de commande comprend également une unité de commande électronique centralisée 15 comportant, d'une part, une première sortie de pilotage 6 apte à transmettre des ordres de pilotage à l'actionneur 2, et d'autre part, une deuxième sortie de pilotage 7 apte à transmettre des commandes au moyen de verrouillage 4 afin d'en piloter l'ouverture ou la fermeture.

Ainsi l'unité de commande est donc apte à piloter l'ensemble des actionneurs 2 et des moyens de verrouillage 4 en fonction d'un ordre reçu en provenance d'un boitier de commande 8 destiné à être actionné par un opérateur.

Par ailleurs, à fin d'optimiser les séquences d'ouverture et de fermeture, le système de commande comprend également un ensemble de capteurs aptes à remonter une information d'état à l'unité de commande 15.

Plus particulièrement, on prévoira un capteur d'état 9 pour chaque moyen de verrouillage 4, un capteur d'approche de fermeture 10 du capot 2, un détecteur de position fermée 11.

Bien évidemment, cette liste de capteurs n'est pas exhaustive et on pourra ajouter tout type de capteur (position,...) nécessaire à la mise en oeuvre d'une séquence d'ouverture ou de fermeture souhaitée.

Les informations retournées par les capteurs 9, 10, 11 sont donc remontées au niveau de l'unité de commande 15 pour traitement et/ou affichage.

L'unité de commande pourra également remonter diverses informations d'états vers le cockpit de l'avion par le biais d'une sortie d'informations 12.

Un opérateur souhaitant manoeuvrer les capots de maintenance d'une nacelle procédera de la façon suivante.

A partir d'une position initiale dans laquelle le capot est fermé et verrouillé, l'opérateur commande l'ouverture par action sur le boîtier de commande 8.

L'unité de commande centralisée 15 reçoit alors cet ordre et met en oeuvre la séquence appropriée.

L'unité de commande 15 envoie tout d'abord un ordre de déverrouillage au moyens de verrouillage 4.

Le capteur 9 renvoie alors une information de déverrouillage du moyen de déverrouillage 4. Lorsque cette information est reçue par l'unité de commande 5, cette dernière peut alors commander l'actionneur 2.

L'arrêt de l'actionneur 2 pourra se faire par simple butée mécanique.

Inversement, à partir d'une position initiale dans laquelle le capot est ouvert l'opérateur commande la fermeture par action sur le boîtier de commande 8.

L'unité de commande centralisée 15 reçoit alors cet ordre et met en oeuvre la séquence appropriée.

L'unité de commande 5 commande donc tout d'abord le retour de l'actionneur 2 en position rétractée.

Le capteur 10 indique l'approche de la position de fermeture. L'unité de commande 15 ordonne alors une limitation de l'effort de l'actionneur en fin de course afin d'éviter des chocs dans les verrous ou autres pièces sensibles et/ou limiter la vitesse et/ou avertir (de façon sonore ou lumineuse par exemple) de la fermeture.

Une fois le capot 2 revenu en position fermée, le capteur 11 confirme cette fermeture à l'unité de commande 15.

Celle-ci peut alors commander la fermeture des moyens de verrouillage 4. Le capteur 9 confirme la bonne fermeture des moyens de verrouillage 4.

Au cours de ces manoeuvres, l'ensemble de ces informations est remonté au cockpit de l'avion.

Bien que l'invention ait été décrite avec un exemple particulier de réalisation, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Système d'actionnement et de contrôle d'au moins un capot mobile (1) d'une nacelle de turboréacteur, comprenant au moins un moyen de verrouillage (4) à commande électrique dudit capot, au moins un actionneur électromécanique (2) destiné à l'entraînement dudit capot et comprenant également une unité de commande électronique (15) centralisée comportant au moins une première sortie de pilotage (6) apte à transmettre des ordres de pilotage à l'actionneur électromécanique, et au moins une deuxième sortie de pilotage (7) apte à transmettre des commandes au moyen de verrouillage à commande électrique afin d'en piloter l'ouverture ou la fermeture selon une séquence d'actionnement prédéterminée.

2. Système d'actionnement selon la revendication 1, **caractérisé en ce qu'**il comprend au moins un moyen de détection (9) de l'état verrouillé ou déverrouillé du moyen de verrouillage (4) ledit moyen de détection étant apte à retourner l'information à l'unité de commande (15) pour traitement et/ou affichage.

3. Système d'actionnement selon l'une quelconque des revendications 1 ou 2, **caractérisé en ce qu'**il comprend au moins un capteur de position du capot mobile(1), ledit capteur de position étant apte à retourner l'information à l'unité de commande (15) pour traitement et/ou affichage.

4. Système d'actionnement selon l'une quelconque des revendications 1 à 3, **caractérisé en ce qu'**il comprend au moins un capteur (10) de d'approche d'une position de fermeture du capot mobile (2), ledit capteur étant apte à retourner l'information à l'unité de commande (15) pour traitement en vue de limiter l'effort délivré par l'actionneur électromécanique (2) et/ou limiteur sa vitesse et/ou avertir de la fermeture et/ou de l'ouverture.

5. Système d'actionnement selon l'une quelconque des revendications 1 à 4, **caractérisé en ce qu'**il comprend au moins un organe de commande (8) manuel relié à l'unité de commande (15).

6. Système d'actionnement selon l'une quelconque des revendications 1 à 5, **caractérisé en ce que** l'unité de commande (15) est intégré à un actionneur.

7. Système de commande selon l'une quelconque des revendications 1 à 6, **caractérisé en ce que** l'unité de commande centralisée (15) comprend au moins une sortie d'informations (12) d'état à destination du cockpit, par exemple.

8. Nacelle pour turboréacteur comprenant une structure d'entrée d'air apte à canaliser un flux d'air vers une soufflante du turboréacteur et une structure médiane destinée à entourer ladite soufflante et à laquelle est rattachée la structure d'entrée d'air de manière à assurer une continuité aérodynamique, la structure d'entrée d'air comprenant, d'une part, au moins un panneau interne fixé à la structure médiane et formant avec cette dernière une structure fixe de la nacelle, et d'autre part, au moins un panneau externe longitudinal rattaché de manière amovible à la structure fixe et intégrant une lèvre d'entrée d'air de manière à former une structure d'entrée d'air amovible, **caractérisée en ce que** la structure d'entrée d'air amovible est associée à un système d'actionnement selon l'une quelconque des revendications 1 à 7.

## Patentansprüche

1. System zur Betätigung und Steuerung zumindest einer mobilen Verschalung (1) einer Triebwerksgondel, zumindest ein Verriegelungsmittel (4) mit elektrischer Steuerung der besagten Verschalung umfassend, zumindest ein elektromechanisches Betätigungsgerät (2), das zum Antrieb der besagten Verschalung bestimmt ist, und auch eine zentrale elektronische Steuereinheit (15) umfasst, die zumindest einen ersten Ansteuerausgang (6) umfasst, der in der Lage ist, dem elektromechanischen Betätigungsgerät Ansteuerbefehle zu übertragen, und zumindest einen zweiten Ansteuerausgang (7), der in der Lage ist, anhand der Verriegelungsmittel mit elektrischer Steuerung Befehle zu übertragen, um entsprechend einer vorbestimmten Betätigungssequenz deren Öffnung oder Schließung anzusteuern.

2. Betätigungssystem nach Anspruch 1, **dadurch gekennzeichnet, dass** es zumindest ein Mittel zur Erkennung (9) des verriegelten oder entriegelten Zustandes des Verriegelungsmittels (4) umfasst, wobei das besagte Erkennungsmittel in der Lage ist, die Information zu Zwecken der Verarbeitung und/oder Anzeige zur Steuereinheit (15) zurückzusenden.

3. Betätigungssystem nach irgendeinem der Ansprüche 1 oder 2, **dadurch gekennzeichnet, dass** es zumindest einen Positionssensor für die mobile Verschalung (1) umfasst, wobei der besagte Positionssensor in der Lage ist, die Information zu Zwecken der Verarbeitung und/oder Anzeige zur Steuereinheit (15) zurückzusenden.

4. Betätigungssystem nach irgendeinem der Ansprüche 1 bis 3, **dadurch gekennzeichnet, dass** es zumindest einen Sensor (10) zur Annäherung einer Schließposition der mobilen Verschalung (2) umfasst, wobei der besagte Sensor in der Lage ist, die Information zur Verarbeitung zur Steuereinheit (15) zurückzusenden, um die Kraft zu verringern, die vom elektromechanischen Betätigungsgerät (2) aufgewandt wird, und/oder um seine Geschwindigkeit zu verringern und/oder sie vom Schließen und/oder vom Öffnen zu benachrichtigen.

5. Betätigungssystem nach irgendeinem der Ansprüche 1 bis 4, **dadurch gekennzeichnet, dass** es zumindest ein manuelles Steuerorgan (8) umfasst, das mit der Steuereinheit (15) verbunden ist.

6. Betätigungssystem nach irgendeinem der Ansprüche 1 bis 5, **dadurch gekennzeichnet, dass** die Steuereinheit (15) in ein Betätigungsgerät integriert ist.

7. Steuersystem nach irgendeinem der Ansprüche 1 bis 6, **dadurch gekennzeichnet, dass** die zentrale Steuereinheit (15) zumindest einen Ausgang, beispielsweise zum Cockpit, für Informationen (12) über den Zustand umfasst.

8. Triebwerksgondel, eine Lufteinlassstruktur umfassend, die in der Lage ist, eine Luftströmung zu einem Gebläse des Triebwerks zu kanalisieren, und eine Mittelstruktur, die dazu bestimmt ist, das besagte Gebläse zu umschließen, und mit der die Lufteinlassstruktur verbunden ist, um eine aerodynamische Kontinuität zu gewährleisten, wobei die Lufteinlassstruktur einerseits zumindest eine interne Platte umfasst, die an der Mittelstruktur befestigt ist, und mit letzterer eine feste Struktur der Gondel bildet, und andererseits zumindest eine externe längliche Platte, die der festen Struktur in abnehmbarer Form zugeordnet ist, und eine Lufteinlasslippe enthält, um eine abnehmbare Lufteinlassstruktur zu bilden, **dadurch gekennzeichnet, dass** die abnehmbare Lufteinlassstruktur einem Betätigungssystem nach irgendeinem der Ansprüche 1 bis 7 zugeordnet ist.

## Claims

1. A system for actuating and controlling at least one moveable cowl (1) of a turbojet engine nacelle, comprising at least one electric-control locking means (4) of said cowl, at least one electro-mechanical actuator (2) intended for driving said cowl and also comprising a centralized electronic controlling unit (15) including at least one first driving outlet (6) capable of transmitting driving orders to the electro-mechanical actuator, and at least one second driving outlet (7) capable of transmitting controls to the electric-control locking means in order to drive the opening and closing according to a predetermined actuating sequence.

2. The actuating system according to claim 1, **characterized in that** it comprises at least one means (9) for detecting the locked or unlocked state of the locking means (4) said detecting means being capable of returning the information to the controlling unit (15) for processing and/or display.

3. The actuating system according to any one of claims 1 or 2, **characterized in that** it comprises at least one position sensor of the moveable cowl (1), said position sensor being capable of returning the information to the controlling unit (15) for processing and/or display.

4. The actuating system according to any one of claims 1 to 3, **characterized in that** it comprises at least one sensor (10) of nearing a closing position of the moveable cowl (2), said sensor being capable of returning the information to the controlling unit (15) for processing with a view to limiting the force delivered by the electromechanical actuator (2) and/or limit the speed thereof and/or warn of the closing and/or the opening.

5. The actuating system according to any one of claims 1 to 4, **characterized in that** it comprises at least one manual controlling member (8) connected to the controlling unit (15).

6. The actuating system according to any one of claims 1 to 5, **characterized in that** the controlling unit (15) is integrated to an actuator.

7. A controlling system according to any one of claims 1 to 6, **characterized in that** the centralized controlling unit (15) comprises at least a status information output (12) towards the cockpit, for example.

8. A turbojet engine nacelle comprising an air inlet structure capable of channeling a flow of air towards a fan of the turbojet engine and a median structure intended to surround said fan and to which is fastened the air inlet structure in such a manner as to ensure aerodynamic continuity, the air inlet structure comprising, on the one hand, at least one inner panel secured to the median structure and forming with the latter a stationary structure of the nacelle, and on the other hand, at least one outer longitudinal panel removeably fastened to the stationary structure and integrating an air inlet lip in such a manner as to form a removable air inlet structure, **characterized in that** the removable air inlet structure is associated with an actuating system according to any one of claims 1 to 7.
